# EUROPÄISCHE PATENTANMELDUNG

(11) **EP 0 794 114 A2**
(43) Veröffentlichungstag der Anmeldung: **10.09.1997**
(21) Anmeldenummer: 97103461.6
(22) Anmeldetag: 03.03.1997
(51) Int. Cl.: B62M 25/08

(54) **Gangschaltsystem**

(30) Priorität: 06.03.1996 DE 19608717
(71) Anmelder: GUSTAV MAGENWIRTH GmbH & Co., D-72574 Bad Urach (DE)
(72) Erfinder: Nier, Rolf, Dr., 72574 Bad Urach (DE)
(74) Vertreter: Hoeger, Stellrecht & Partner

(57) **Zusammenfassung**

Um ein Gangschaltsystem für Kettenschaltungen von Fahrrädern, umfassend einen ersten Kettenwechsler (30) zum Umlenken der Kette (20) auf unterschiedliche tretlagerseitige Kettenblätter (18), einen zweiten Kettenwechsler (36) zum Umlenken der Kette (20) auf unterschiedliche radseitige Ritzel (22) und eine Gangschalteinrichtung (32) mit einer ersten Schalteinheit (60) für den ersten Kettenwechsler (30) und mit einer zweiten Schalteinheit (62) für den zweiten Kettenwechsler(36) und mit einem handbetätigten Schaltelement (40), mit welchem beide Schalteinheiten (30,32) gleichzeitig so betätigbar sind, daß durch diese die Kette (20) lediglich auf für eine Gangfolge ausgewählte Kettenblatt/Ritzelkombination auflegbar und von einem geschalteten Gang nur ein Übergang zu einem in der Gangfolge nächstliegenden Gang möglich ist, derart zu verbessern, daß ein höherer Schaltkomfort mit möglichst einfachem Aufwand erreichbar ist, wird vorgeschlagen, daß der erste Kettenwechsler (30) ein durch die erste Schalteinheit (60) mechanisch ansteuerbarer mechanischer Kettenwechsler ist und daß der zweite Kettenwechsler (36) ein durch die zweite Schalteinheit elektrisch (62) ansteuerbarer Kettenwechsler ist.

## Beschreibung

Die Erfindung betrifft ein Gangschaltsystem für Kettenschaltungen von Fahrrädern, umfassend einen ersten Kettenwechsler zum Umlegen der Kette auf unterschiedliche tretlagerseitige Kettenblätter, einen zweiten Kettenwechsler zum Umlegen der Kette auf unterschiedliche radseitige Ritzel und eine Gangschalteinrichtung mit einer ersten Schalteinheit für den ersten Kettenwechsler und mit einer zweiten Schalteinheit für den zweiten Kettenwechsler und mit einem handbetätigten Schaltelement, mit welchem beide Schalteinheiten gleichzeitig so betätigbar sind, daß durch diese die Kette lediglich auf für eine Gangfolge ausgewählte Kettenblatt/Ritzelkombinationen auflegbar ist und von einem geschalteten Gang nur ein Übergang zu einem in der Gangfolge nächstliegenden Gang möglich ist.

Derartige Gangschaltsysteme sind beispielsweise aus der DE-A-195 19 112.9 bekannt.

Diese Gangschaltsysteme arbeiten jedoch alle auf einer mechanischen Basis.

Es sind zwar auf elektrischer Basis arbeitende Gangschaltsysteme für Kettenschaltungen bekannt, beispielsweise aus der EP-A-0 566 025 oder der EP-A-0 647 558 oder der EP-A-0 566 024, diese haben jedoch alle den Nachteil, daß die Kettenwechsler so ausgelegt sein müssen, daß sie den Schaltvorgang mit dem größten Kraftaufwand zum Umlegen der Kette bewältigen.

Der Erfindung liegt daher die Aufgabe zugrunde, ein Gangschaltsystem der gattungsgemäßen Art derart zu verbessern, daß ein höherer Schaltkomfort mit möglichst einfachem Aufwand erreichbar ist.

Diese Aufgabe wird bei einem Gangschaltsystem der eingangs beschriebenen Art erfindungsgemäß dadurch gelöst, daß der erste Kettenwechsler ein durch die erste Schalteinheit mechanisch ansteuerbarer mechanischer Kettenwechsler ist und daß der zweite Kettenwechsler ein durch die zweite Schalteinheit elektrisch ansteuerbarer Kettenwechsler ist.

Die erfindungsgemäße Lösung hat den großen Vorteil, daß sie einerseits den höheren Schaltkomfort ausnützt und zwar bei dem Kettenwechsler, welcher in der Lage sein sollte, die Kette zwischen einer Vielzahl von Ritzeln umzulegen und andererseits den Vorteil, daß der erste Kettenwechsler nach wie vor mechanisch betätigt ist, da bei diesem in der Regel die Kette zwischen wenigen Kettenblättern umlegbar ist, andererseits für das Umlegen der Kettenblätter ein hoher Kraftaufwand erforderlich ist.

Damit ist die erfindungsgemäße Gangschalteinrichtung einerseits besonders einfach aufgebaut und erlaubt es andererseits an dem Kettenwechsler, an welchem eine Vielzahl von Schaltvorgängen durchführbar ist, die Komfortvorteile der elektrischen Ansteuerung auszunutzen.

Besonders vorteilhaft ist es dabei, wenn die zweite Schalteinheit eine Schaltsignalgeneratoreinheit umfaßt, welche bei Betätigung des Schaltelements Schaltsignale erzeugt, mit welcher dann der elektrisch ansteuerbare zweite Kettenwechsler in einfacher Weise ansteuerbar ist.

Die Schalteinheiten könnten gesteuert durch das handbetätigte Schaltelement jede Art von Bewegung durchführen. Als besonders geeignet hat es sich jedoch erwiesen, wenn das Schaltelement um eine Achse drehbar ist und wenn die Signalgeneratoreinheit bei einer durch das Schaltelement initiierten Drehbewegung die Schaltsignale erzeugt.

Die Signalgeneratoreinheit ist prinzipiell an den verwendeten elektrisch ansteuerbaren zweiten Kettenwechsler anzupassen. Bei den üblichen Lösungen ist vorzugsweise vorgesehen, daß die Signalgeneratoreinheit pulsförmige elektrische Auf- oder Ab-Schaltsignale für den zweiten Kettenwechsler erzeugt, so daß mit diesen pulsförmigen Schaltsignalen der zweite Kettenwechsler in einfacher Art und Weise ansteuerbar ist und eine derartige Ansteuerung darüber hinaus auch die Möglichkeit eröffnet, die zur Ansteuerung notwendige elektrische Leistung weitgehend zu reduzieren.

Vorzugsweise ist vorgesehen, daß die Auf-Schaltsignale und die Ab-Schaltsignale an getrennten Signalanschlüssen ausgegeben werden. Eine derartige Lösung ist beispielsweise geeignet zur Ansteuerung der bekannten Kettenwechsler der Firma Mavic oder nach ähnlichem Prinzip arbeitender anderer Kettenwechsler, welche ebenfalls einen Anschluß für Auf-Schaltsignale und einen Anschluß für Ab-Schaltsignale aufweisen und außerdem den großen Vorteil haben, daß sie einen geringen elektrischen Leistungsbedarf haben, da sie die zum Umlegen der Kette erforderliche Kraft aus einer Drehbewegung eines von der Kette angetriebenen Kettenwechslerritzels ableiten.

Die Signalgeneratoreinheit kann prinzipiell in unterschiedlichster Art und Weise aufgebaut sein. Beispielsweise wäre es denkbar, einen Drehgeber zu verwenden und in Abhängigkeit von der Drehstellung des handbetätigten Schaltelements mittels einer integrierten Schaltung die geeigneten Schaltpulse zu erzeugen. Eine derartige Lösung ist jedoch im Hinblick auf die rauhen Umgebungsbedingungen, in der die Gangschalteinrichtung zuverlässig arbeiten soll, problematisch. Aus diesem Grund ist vorteilhafterweise vorgesehen, daß die Schaltsignalgeneratoreinheit eine Schaltkulisse aufweist, welche mit einer elektrischen Schaltsignalgebereinheit zusammenwirkt, um die gewünschten Schaltsignale zu erzeugen. Eine derartige Lösung hat insbesondere hinsichtlich der Zuverlässigkeit und der Einfachheit des Aufbaus und bei den rauhen Umgebungsbedingungen von Fahrrädern große Vorteile aufgrund ihrer Robustheit.

Besonders zweckmäßig läßt sich die Schaltsignalgeneratoreinheit dann ausführen, wenn die Schaltsignalgebereinheit zwei Schaltsignalgeber umfaßt, von denen jeder bei Betätigung durch die Schaltkulisse ein Schaltsignal erzeugt, und wenn die Schaltkulisse zwei Kulissenbahnen umfaßt, von denen jede auf einen der Signalgeber wirkt. Damit läßt sich in besonders einfacher Weise die Unterscheidung treffen zwischen den Schaltvorgängen, bei welchen, beispielsweise beim Heraufschalten in einer Richtung von einem Ritzel zum nächstfolgenden weitergeschaltet werden muß oder zurückgeschaltet werden muß, weil die Kette vom einen Kettenblatt auf das andere umgelegt wurde.

Darüber hinaus ist bei einer Gangschalteinrichtung für Fahrräder zu berücksichtigen, daß diese auch in der Lage sein muß, bei ständigem Heraufschalten oder nachfolgendem wieder Zurückschalten stets zuverlässig die Kette einerseits auf das richtige Ritzel und andererseits auf das richtige Kettenblatt zu legen.

Aus diesem Grund ist vorteilhafterweise vorgesehen, daß die Schaltsignalgeneratoreinheit eine Schaltrichtungserkennungseinheit aufweist, welche je nach Schaltrichtung die von der Signalgebereinheit erzeugten Schaltsignale als Auf-Schaltsignale oder als Ab-Schaltsignale ausgibt.

Vorzugsweise ist die Schaltrichtungserkennungseinheit so ausgebildet, daß sie je nach Schaltrichtung die Schaltsignale des einen Schaltsignalgebers an einem Auf-Signalanschluß und die des anderen Schaltsignalgebers an einem Ab-Signalanschluß oder umgekehrt ausgibt.

Hinsichtlich der Ausbildung der ersten Schalteinheit wurden im Zusammenhang mit den bisherigen Erläuterungen der erfindungsgemäßen Lösung keine näheren Angaben gemacht. So sieht ein vorteilhaftes Ausführungsbeispiel vor, daß die erste Schalteinheit ein Kurvenbahnelement und einen mit diesem zusammenwirkenden Bahnfolger aufweist, welcher beispielsweise über einen Seilzug den ersten Kettenwechsler mechanisch betätigt.

Zweckmäßigerweise ist das Kurvenbahnelement ebenfalls um eine Drehachse drehbar und steht somit bei unterschiedlichen Gängen relativ zum Bahnfolger in unterschiedlichen Drehwinkelstellungen.

Vorzugsweise ist - insbesondere zur Minimierung des von der Hand aufzubringenden Kraftaufwandes auf das Schaltelement - vorgesehen, daß bei dem Kurvenbahnelement der Winkelabstand zwischen den Schaltstellungen, zwischen denen ein Umlegen der Kette von einem Kettenblatt auf das andere erforderlich ist, größer ist als zwischen den Schaltstellungen, in welchen vom ersten Kettenwechsler kein Umlegen der Kette von einem Kettenblatt auf das andere erforderlich ist.

Hinsichtlich des von Hand zu betätigenden Schaltelements wurden im Zusammenhang mit der bislang beschriebenen Lösung keine näheren Angaben gemacht. So sieht eine vorteilhafte Lösung vor, daß das Schaltelement ein üblicher Hebel ist.

Besonders vorteilhaft ist es jedoch, wenn das Schaltelement als Drehgriff ausgebildet ist.

Ein derartiger Drehgriff ist vorzugsweise handgriffnah des Fahrrades angeordnet und beispielsweise als Teil eines Handgriffs des Fahrrades ausgeführt, um eine Betätigung durch die Hand zu ermöglichen, ohne daß diese den Handgriff verläßt.

Noch vorteilhafter ist es, wenn das Schaltelement einen drehbaren Handgriff des Fahrrades bildet, so daß unmittelbar durch Drehen des Handgriffs eine Gangschaltung möglich ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Darstellung eines Fahrrads mit einer erfindungsgemäßen Gangschaltsystem;
- Fig. 2: eine schematisierte Draufsicht auf die Kettenblätter und Ritzel sowie die möglichen Lagen der Kette;
- Fig. 3: ein Ausführungsbeispiels eines Schaltschemas für eine Gangschaltung mit drei Kettenblättern und insgesamt sieben Ritzeln;
- Fig. 4: einen Längsschnitt durch ein Ausführungsbeispiel einer Gangschalteinrichtung;
- Fig. 5: eine Expansionsdarstellung der einzelnen Element der Gangschalteinrichtung;
- Fig. 6: eine schematische Funktionsdarstellung aller Elemente der Gangschalteinrichtung und
- Fig. 7: einen Schnitt durch eine erste mechanische Schalteinheit.

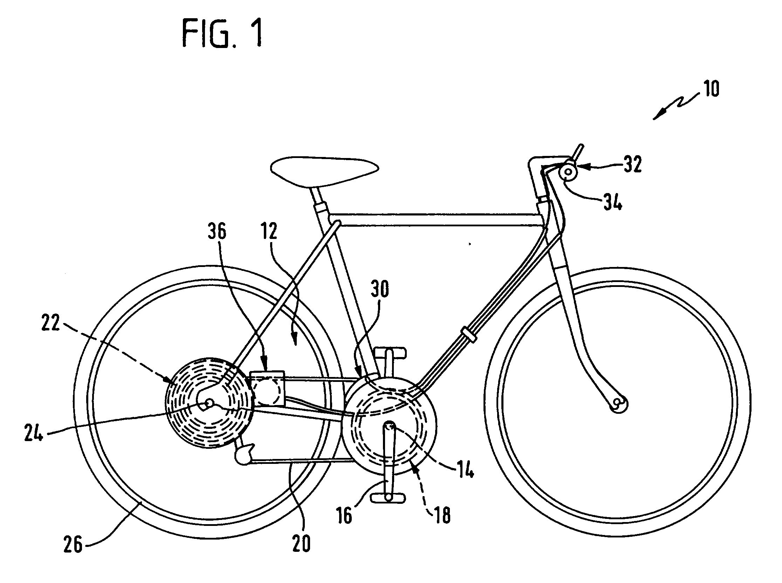

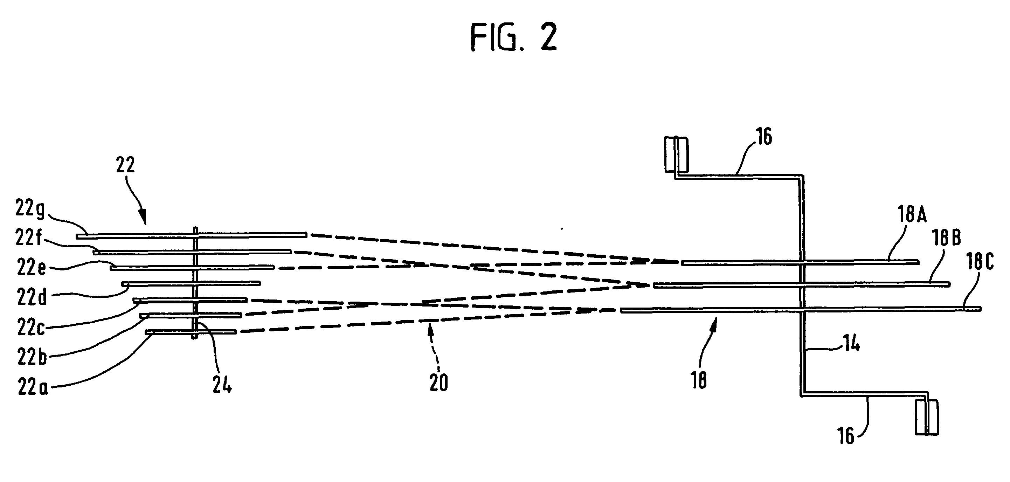

Ein in Fig. 1 dargestelltes und als Ganzes mit 10 bezeichnetes Fahrrad mit einer erfindungsgemäßen Kettenschaltung 12 weist, wie in Fig. 1 und 2 dargestellt, an einer Tretlagerwelle 14 angeordnete Pedale 16 auf, mit welchen ein Satz von drehfest auf der Tretlagerwelle 14 angeordneten Kettenblättern 18A, 18B und 18C antreibbar ist.

Auf einem der Kettenblätter 18A, 18B oder 18C liegt eine Kette 20 auf, mit welcher ein Satz von Ritzeln 22a bis 22g antreibbar ist, wobei die Ritzel 22a bis 22g drehfest auf einer Nabe 24 eines Hinterrades 26 sitzen.

Um die Kette 20 von einem der Kettenblätter 18 zum jeweils anderen Kettenblatt 18 zu bewegen, ist nahe des Satzes von Kettenblättern ein erster Kettenwechsler 30 vorgesehen, welcher über eine Gangschalteinrichtung 32, welche beispielsweise am Lenkrad 34 angeordnet ist, betätigbar ist.

Ferner ist über die Gangschalteinrichtung 32 ein zweiter Kettenwechsler 36 betätigbar, welcher dazu dient, die Kette 20 von einem der Ritzel 22 auf das andere der Ritzel 22 umzulegen.

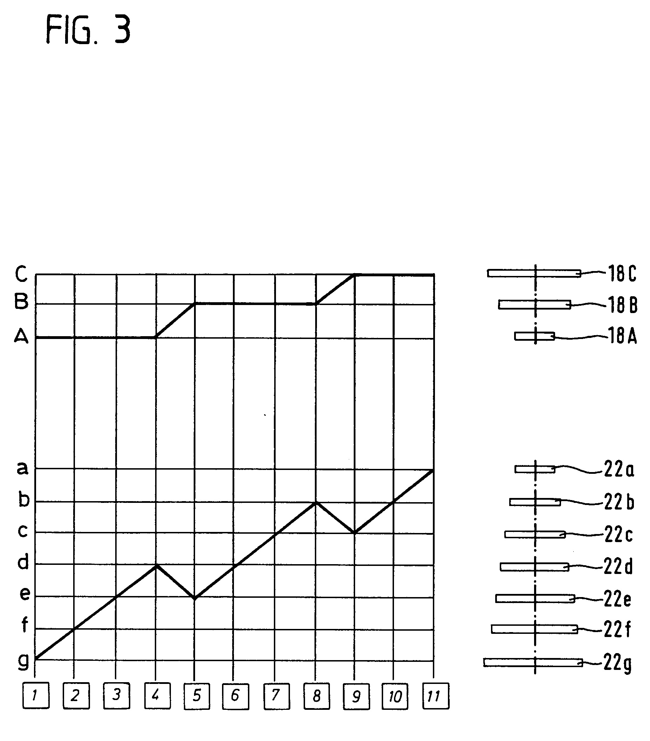

Die Auswahl des jeweiligen Ritzels 22 und die Auswahl des jeweiligen Kettenblatts 18 ist beispielsweise durch ein in Fig. 3 dargestelltes Schaltschema bestimmt, wobei dies ein übliches Schaltschema ist, mit welchem sich bei bestimmter Zähnezahl der Ritzel 22 und der Kettenblätter 18 insgesamt 11 Gänge [1] bis [11] realisieren lassen, während die Übersetzungsverhältnisse stetig ansteigen und beispielsweise von 0,9, 1,1, 1,3, 1,5, 1,8, 2,1, 2,5, 2,9, 3,2, 3,7 bis 4,0 reichen.

Aus dem in Fig. 3 dargestellten Schaltschema ergibt sich, daß beispielsweise bei auf dem Kettenblatt 18A aufliegender Kette 20 die Gänge 1 bis 4 realisierbar sind, wobei beim ersten Gang die Kette auf dem Ritzel 22g liegt und dann sukzessive hochgeschaltet werden kann, bis die Kette auf dem Ritzel 22d liegt.

Beim Umschalten vom vierten auf den fünften Gang wird die Kette vom Kettenblatt 18A auf das Kettenblatt 18B gelegt. In diesem Fall wird aber die Kette außerdem vom Ritzel 22d auf das Ritzel 22e zurückgeschaltet. Zwischen dem fünften und dem achten Gang wird dann wird dann wieder sukzessive vom Ritzel 22e über das Ritzel 22d, das Ritzel 22c bis zum Ritzel 22b geschaltet, wobei die Kette stets auf dem Kettenblatt 18b liegen bleibt.

Das Umschalten vom achten auf den neunten Gang erfordert wieder ein Umlegen der Kette vom Kettenblatt 18B auf das Kettenblatt 18C und gleichzeitiges Umlegen der Kette vom Ritzel 22b auf das Ritzel 22c, so daß sich der neunte, zehnte und elfte Gang durch Umlegen der Kette vom Ritzel 22c auf das Ritzel 22b und das Ritzel 22a realisieren lassen.

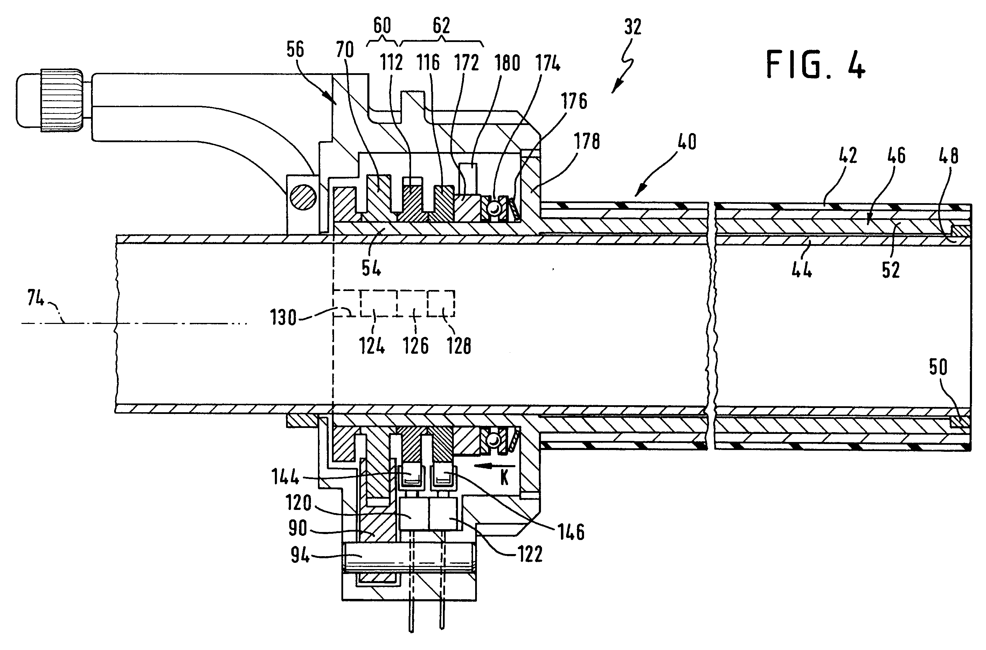

Die in Fig. 4 vergrößert dargestellte Gangschalteinrichtung 32 umfaßt als Schaltelement 40 einen Handgriff 42 des Lenkers, welcher auf einem Lenkerrohr 44 mittels einer Hülse 46 drehbar gelagert ist, wobei die Hülse 46 von einem äußeren Ende 48 des Lenkerrohrs 44 auf dieses aufgeschoben und mittels eines Sicherungsrings 50 fixiert und gelagert ist.

Die Hülse 46 umfaßt einen ersten Hülsenabschnitt 52, welcher den Handgriff 42 trägt und einen zweiten Hülsenabschnitt 54, welcher sich im Anschluß an den ersten Hülsenabschnitt 52 in ein Gehäuse 56 hineinerstreckt, in welchen eine die erste Schalteinheit 60 für den ersten Kettenwechsler 30 und eine zweite Schalteinheit 62 für den zweiten Kettenwechsler 36 angeordnet sind.

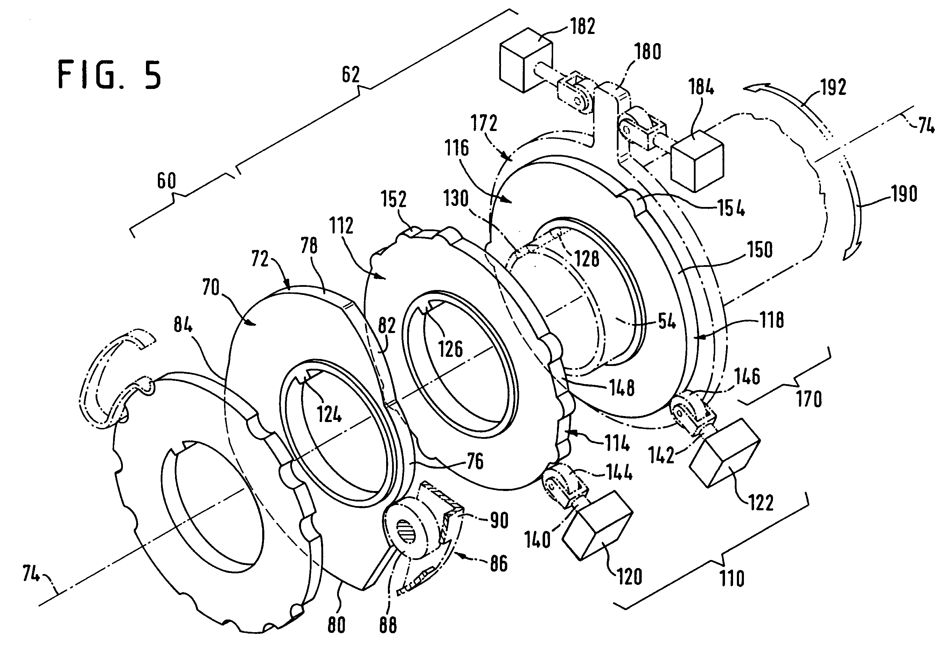

Wie in Fig. 4 und insbesondere Fig. 5 noch vergrößert dargestellt, umfaßt die erste Schalteinheit 60 eine Kurvenscheibe 70, welche an ihrem Außenumfang mit einer Kurvenbahn 72 versehen ist. Die Kurvenscheibe 70 ist dabei um eine Drehachse 74 drehbar.

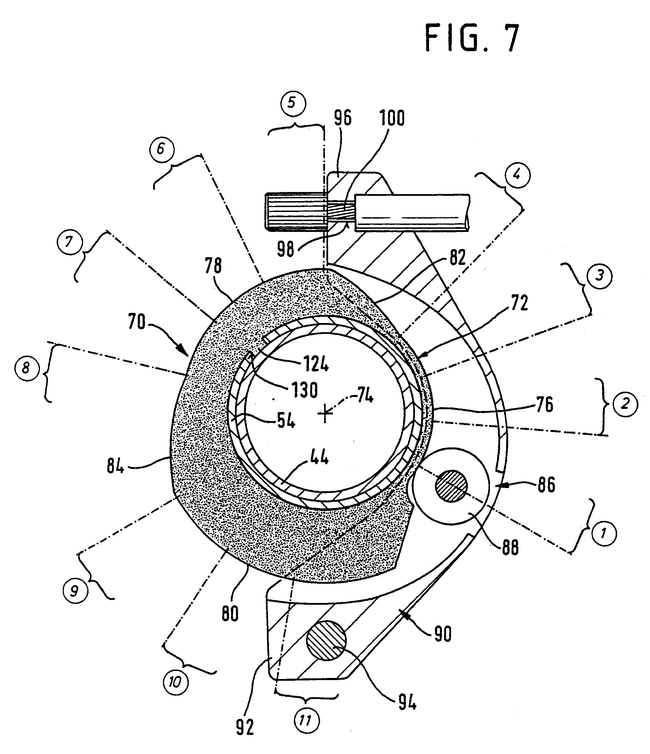

Die Kurvenbahn 72 umfaßt insgesamt einen ersten Kurvenabschnitt 76, welcher den geringsten radialen Abstand von der Drehachse 74 aufweist, daran anschließend einen zweiten Kurvenabschnitt 78, welcher einen größeren radialen Abstand von der Drehachse 74 aufweist und zuletzt einen dritten Kurvenabschnitt 80, welcher den größten radialen Abstand von der Drehachse 74 aufweist. In jedem Kurvenabschnitt verläuft dabei die Kurvenbahn 72 in konstantem radialem Abstand von der Drehachse 74, während in einem ersten Übergangsbereich 82 der Radius vom Radius des ersten Kurvenabschnitts 76 zum Radius des zweiten Kurvenabschnitts 78 zunimmt und in einem zweiten Übergangsbereich 84 der Radius vom zweiten Kurvenabschnitt 78 zum dritten Kurvenabschnitt 80 zunimmt (Fig. 7).

An der Kurvenbahn 72 liegt ein Bahnfolger 86 an, welcher eine Abtastrolle 88 umfaßt, die drehbar an einem Abtasthebel 90 gelagert ist, wobei wie in Fig. 7 dargestellt, der Abtasthebel 90 an einem Ende 92 um einen Lagerbolzen 94 schwenkbar an dem Gehäuse 56 gelagert ist, während an einem dem Ende 92 gegenüberliegenden Ende 96 der Abtasthebel 90 eine Aufnahme 98 für einen Seilzug 100 aufweist, über welchen der erste Kettenwechsler 30 mechanisch betätigbar ist, wobei je nach dem, auf welchem Kurvenabschnitt 76, 78 oder 80 die Abtastrolle 88 aufliegt, der Abtasthebel 90 mit seinem Ende 96 mehr oder weniger stark an dem Seilzug 100 zieht und somit auf den ersten Kettenwechsler 30 eine lineare Betätigungsbewegung ausübt.

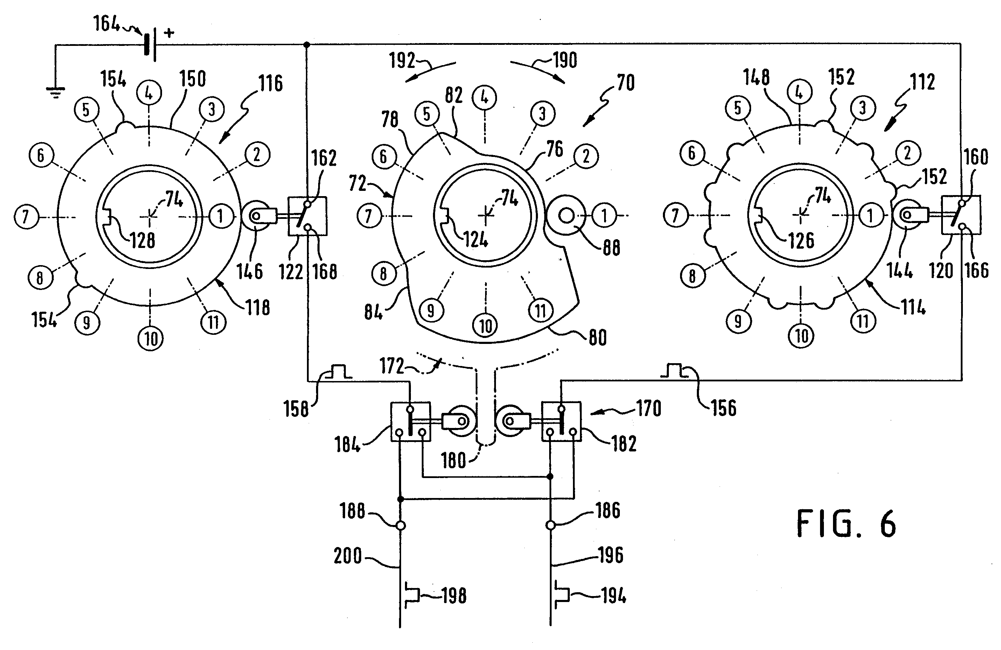

Die zweite Schalteinheit 62 umfaßt ihrerseits, wie in Fig. 5 und 6 dargestellt, eine Signalgeneratoreinheit 110, welche ein erstes Kulissenelement 112 mit einer ersten Kulissenbahn 114, ein zweites Kulissenelement 116 mit einer zweiten Kulissenbahn 118 umfaßt, wobei die erste Kulissenbahn 114 auf einen ersten Schaltsignalgeber 120 und die zweite Kulissenbahn 118 auf einen zweiten Schaltsignalgeber 122 wirkt, welche, wie in Fig. 6 dargestellt, im einfachsten Fall als Taster ausgebildet sind.

Das erste Kulissenelement 112 und das zweite Kulissenelement 116 sind dabei ebenfalls um die Drehachse 74 drehbar und sitzen auf dem zweiten Hülsenabschnitt 54 in gleicher Weise wie die Kurvenscheibe 70, wobei die Kurvenscheibe 70 mit einer Feder 124, das erste Kulissenelement 112 mit einer Feder 126 und das zweite Kulissenelement 116 mit einer Feder 128 in eine Nut 130 des zweiten Hülsenabschnitts 54 eingreifen und somit alle drehfest miteinander und auch über den ersten Hülsenabschnitt 52 drehfest mit dem Handgriff 42 verbunden sind.

Die beiden Schaltsignalgeber 120 und 122 weisen beide einen Tastfinger 140 und 142 auf, wobei jeder der Tastfinger 140 und 142 mit einer Tastrolle 144 bzw. 146 versehen ist, welche auf der ersten Kulissenbahn 114 bzw. der zweiten Kulissenbahn 118 anliegend läuft. Jede der Kulissenbahnen 114 und 118 weist eine in konstantem Radius um die Drehachse 74 verlaufende Grundbahn 148 bzw. 150 auf, von welcher Schaltnocken 152 bzw. 154 abstehen, wobei dann, wenn die Tastrolle 144 oder 146 über einen der Schaltnocken 152 bzw. 154 läuft, der jeweilige Schaltsignalgeber 120 bzw. 122 einen Schaltimpuls 156 bzw. 158 erzeugt.

Zur Erzeugung eines derartigen Schaltimpulses ist jeweils ein erster Anschluß 160 bzw. 162 der Schaltsignalgeber 120 und 122 mit einer positiven Speisespannung einer Spannungsquelle 164 verbunden und ein zweiter Anschluß 166 bzw. 168 führt zu einer als Ganzes mit 170 bezeichneten Schaltrichtungserkennungseinheit der Signalgeneratoreinheit 110. Die Schaltrichtungserkennungseinheit umfaßt eine Steuerscheibe 172 mit einem Steuernocken, wobei die Steuerscheibe 172, wie in Fig. 4 dargestellt, durch Reibschluß bei einer Drehbewegung des zweiten Hülsenabschnitts 54 mitnehmbar ist. Hierzu liegt die Steuerscheibe 172 beispielsweise mit Reibschluß an dem zweiten Kulissenelement 116 an und auf einer dem zweiten Kulissenelement 116 gegenüberliegenden Seite an einem Axialdrehlager 174, das seinerseits durch eine Tellerfeder 176 beaufschlagt ist, die mit ihrem das Axialdrehlager 174 nicht beaufschlagenden Ende an einem Flansch 178 axial unverschieblich mit dem zweiten Hülsenabschnitt 54 verbunden ist. Die Tellerfeder 176 wirkt dabei auf das Drehlager 174 und dieses wirkt seinerseits auf die Steuerscheibe 172, welche dadurch mit einer axialen Anpresskraft K an dem zweiten Kulissenelement 116 angelegt wird, um die reibschlüssige Mitnahme der Steuerscheibe 172 mit einer Drehbewegung des zweiten Kulissenelements 116 zu gewährleisten.

Die Steuerscheibe 172 umfaßt ihrerseits einen Steuernocken 180, welcher auf zwei beiderseits des Steuernocken 180 angeordnete und die Mitnahmebewegung der Steuerscheibe 172 begrenzende Umschalter 182 oder 184 wirkt. Wird der Handgriff 42 in einer Auf-Schaltrichtung 190 gedreht, so betätigt der Steuernocken 180 die Umschalter 182 oder 184 so, daß der zweite Anschluß 166 des ersten Schaltsignalgebers 120 durch den Umschalter 182 mit einem Auf-Signalanschluß 186 verbunden wird, während vom Umschalter 184 der zweite Anschluß 168 des zweiten Schaltsignalgebers 122 mit einem Ab-Signalanschluß 188 verbunden wird.

Wird dagegen der Handgriff 42 in Richtung einer Ab-Schaltrichtung 192 gedreht, so verbindet der Umschalter 182 den zweiten Anschluß 166 mit dem Ab-Signalanschluß 188 und der Umschalter 184 den zweiten Anschluß 168 des zweiten Schaltsignalgebers 122 mit dem Auf-Signalanschluß 186.

Jeder am Auf-Signalanschluß 186 erscheinende Schaltimpuls wirkt somit als Auf-Schaltimpuls 194 und wird über eine mit dem Auf-Signalanschluß 186 verbundene Signalleitung 196 übertragen, während jeder am Ab-Signalanschluß 188 ankommende Schaltimpuls 156 oder 158 als Ab-Schaltimpuls 198 wirkt und über eine entsprechende Signalleitung 200 übertragen wird.

Der zweite Kettenwechsler 36 ist dabei als elektrisch schaltbarer Kettenwechsler ausgebildet, welcher über die Signalleitungen 196 und 200 steuerbar ist. Beispielsweise handelt es sich bei diesem zweiten Kettenwechsler 36 um einen Kettenwechsler der Firma Mavic, welcher beispielsweise in der Zeitschrift "tour" 8/93, Seite 40 beschrieben ist.

Die erfindungsgemäße Gangschalteinrichtung arbeitet wie folgt.

In der dem ersten Gang entsprechenden Schaltstellung liegt die Abtastrolle 88 am ersten Kurvenabschnitt 76 an, so daß - wie bereits in Fig. 3 dargestellt ist - die Kette 20 über das Kettenblatt 18A läuft. Ferner ist der zweite Kettenwechsler 36 so gestellt, daß die Kette 20 über das Ritzel 22g läuft.

Wird nun ausgehend von dem ersten Gang [1] durch Drehung des Handgriffs 42 in Auf-Schaltrichtung 190 sowohl die Kurvenscheibe 70 als auch die Kulissenelemente 112 und 116 verdreht, so wandert die Abtastrolle 88 auf dem ersten Kurvenabschnitt 76 weiter, ohne eine Schaltung durch den ersten Kettenwechsler 30 auszulösen. Ferner verläuft die Tastrolle 146 zwischen dem ersten und dem zweiten Gang auf der Grundbahn 150 ohne das dort ein Schaltnocken 154 angeordnet ist.

Dagegen ist zwischen dem ersten Gang [1] und dem zweiten Gang [2] ein Schaltnocken 152 angeordnet, welcher somit den ersten Schaltsignalgeber 120 betätigt, der das Schaltsignal 156 abgibt, und dieses wird von der Schaltrichtungserkennungseinheit 170 auf den Auf-Signalanschluß 186 geschaltet. In diesem Fall bewegt sich der Steuernocken 180 in Richtung des Umschalters 184, so daß beide Umschalter 182 und 184 so betätigt sind, daß der zweite Anschluß 166 des ersten Schaltsignalgebers 120 mit dem Auf-Signalanschluß 186 verbunden ist und der zweite Anschluß 168 des Schaltsignalgebers 122 mit dem Ab-Signalanschluß 188.

Damit wird, wie bereits in Fig. 3 dargestellt, vom ersten auf den zweiten Gang geschaltet.

Desgleichen weist die erste Kurvenbahn 114 zwischen der Schaltstellung für den zweiten Gang [2] und den dritten Gang [3] sowie dieser und der Schaltstellung für den vierten Gang [4] jeweils ebenfalls einen Schaltnocken 152 auf, so daß bei Drehen des Handgriffs 42 jeweils am Auf-Signalanschluß 186 der Schaltimpuls 156 ankommt und dadurch der zweite Kettenwechsler 36 vom Ritzel 22f auf das Ritzel 22e und von diesem auf das Ritzel 22d schaltet.

Der erste Kurvenabschnitt 76 erstreckt sich von der Schaltstellung für den ersten Gang [1] bis zur Schaltstellung für den vierten Gang [4] mit konstantem radialem Abstand von der Drehachse 74.

Ferner weist die zweite Kurvenbahn 118 zwischen der Schaltstellung für den ersten Gang [1] und der Schaltstellung für den vierten Gang [4] keinen Schaltnocken 154 auf.

Auf der zweiten Kulissenbahn 118 ist lediglich zwischen der Schaltstellung für den vierten Gang [4] und den fünften Gang [5] und der Schaltstellung zwischen dem achten Gang [8] und dem neunten Gang [9] ein Schaltnocken 154 angeordnet. Wird daher vom vierten [4] auf den fünften [5] Gang geschaltet, so erzeugt der Schaltnocken 154 durch Betätigen des zweiten Schaltsignalgebers 122 den Schaltimpuls 158, welcher - da stets in Auf-Drehrichtung 190 gedreht wird - von dem Umschalter 184 auf dem Ab-Signalanschluß 188 ausgegeben wird, so daß beim Schalten von dem vierten [4] auf den fünften [5] Gang der zweite Kettenwechsler 36 einen Ab-Schaltimpuls 198 erhält und somit vom Ritzel 22d auf das Ritzel 22e zurückschaltet. Ferner weist die erste Kulissenbahn 114 zwischen der Schaltstellung für den vierten Gang [4] und der Schaltstellung für den fünften Gang [5] keinen Schaltnocken auf, so daß der erste Schaltsignalgeber 120 keinen Schaltimpuls 156 erzeugt.

Darüber hinaus weist die Kurvenbahn 72 zwischen dem vierten [4] und dem fünften [5] Gang den ersten Übergangsbereich 82 auf, in dessen Verlauf der Radius durch Übergang zum zweiten Kurvenabschnitt 78 vergrößert wird. Die Abtastrolle 88 wird daher beim Übergang von der Schaltstellung für den vierten Gang [4] zur Schaltstellung für den fünften Gang [5] auf den Seilzug 100 einwirken und somit den ersten Kettenwechsler 30 derart betätigen, daß dieser - wie in Fig. 3 dargestellt - die Kette 20 vom Kettenblatt 18A auf das Kettenblatt 18B umlegt.

Der zweite Kurvenabschnitt 78 erstreckt sich von der Schaltstellung für den fünften Gang [5] bis zur Schaltstellung für den achten Gang [8] mit konstantem Radius, so daß bei weiterem Hochschalten kein Schaltvorgang durch den ersten Kettenwechsler 30 erfolgt.

Dagegen weist die erste Kulissenbahn 114 zwischen der Schaltstellung für den fünften Gang [5] und der Schaltstellung für den sechsten Gang [6] sowie dieser und der Schaltstellung für den siebten Gang [7] sowie dieser und der Schaltstellung für den achten Gang [8] jeweils einen Schaltnocken 152 auf, so daß bei Weiterdrehen in Aufschaltrichtung 190 stets der zweite Kettenwechsler 36 so betätigt wird, daß er die Kette 20 vom Ritzel 22e auf das Ritzel 22d dann auf das Ritzel 22c und schließlich auf das Ritzel 22b umlegt.

Beim Umschalten vom achten auf den neunten Gang wird, wie ebenfalls in Fig. 3 dargestellt wieder vom Ritzel 22b auf das Ritzel 22c zurückgeschaltet, so daß die erste Kulissenbahn 114 zwischen der Schaltstellung für den achten Gang [8] und der Schaltstellung für den neunten Gang [9] keinen Schaltnocken 152 aufweist, während die zweite Kulissenbahn 118 einen Schaltnocken 154 zwischen diesen Schaltstellungen aufweist, so daß wiederum ein Zurückschalten erfolgt.

Desgleichen liegt der zweite Übergangsbereich 84 zwischen der Schaltstellung für den achten Gang [8] und der Schaltstellung für den neunten Gang [9]. Im Anschluß daran wird wiederum zwischen der Schaltstellung für den neunten Gang [9] und der Schaltstellung für den 10 Gang [10] sowie dieser und der Schaltstellung für den elften Gang [11] durch einen Schaltnocken 152 der ersten Kulissenbahn 114 vom Ritzel 22c auf das Ritzel 22b und schließlich auf das Ritzel 22a weitergeschaltet, während im dritten Kurvenabschnitt 80 kein weiterer Schaltvorgang durch die Abtastrolle 88 erfolgt und auch kein Schaltimpuls durch die zweite Kulissenbahn 118 erzeugt wird.

Beim Zurückschalten erkennt die Schaltrichtungserkennungseinheit 170 die Abschaltrichtung 192. Dadurch, daß sich der Steuernocken 180 in Richtung des Umschalters 182 bewegt, so daß nunmehr der Umschalter 184 den zweiten Anschluß des zweiten Schaltsignalgebers 122 mit dem Auf-Signalanschluß verbindet und der Umschalter 182 den zweiten Anschluß 166 mit dem Ab-Signalanschluß 188 und folglich die Schaltnocken 154 zwischen der Schaltstellung für den neunten Gang und der Schaltstellung für den achten Gang sowie der Schaltstellung für den fünften Gang und der Schaltstellung für den vierten Gang jeweils einen Schaltimpuls 158 erzeugt, welcher am Auf-Signalanschluß 186 anliegt.

Ferner erzeugen alle Schaltnocken 152 der ersten Kulissenbahn 114 Schaltimpulse 156, welche aufgrund der Umschaltung durch die Schaltungsrichtungserkennungseinheit 170 am Ab-Signalanschluß 188 anliegen, so daß gemäß dem in Fig. 3 dargestellten Schaltschema wiederum zurückgeschaltet wird, wobei außerdem auch der erste Kettenwechsler 30 entsprechend der Kurvenbahn 72, abgetastet durch die Abtastrolle 88 mechanisch über den Seilzug 100 entsprechend Fig. 3 betätigt wird.

## Patentansprüche

1. Gangschaltsystem für Kettenschaltungen von Fahrrädern, umfassend einen ersten Kettenwechsler (30) zum Umlenken der Kette (20) auf unterschiedliche tretlagerseitige Kettenblätter (18A, 18B, 18C), einen zweiten Kettenwechsler (36) zum Umlenken der Kette (20) auf unterschiedliche radseitige Ritzel (22a bis 22g) und eine Gangschalteinrichtung (32) mit einer ersten Schalteinheit (60) für den ersten Kettenwechsler (30) und mit einer zweiten Schalteinheit (62) für den zweiten Kettenwechsler (36) und mit einem handbetätigten Schaltelement (40), mit welchem beide Schalteinheiten (30, 32) gleichzeitig so betätigbar sind, daß durch diese die Kette (20) lediglich auf für eine Gangfolge ausgewählte Kettenblatt/Ritzelkombination auflegbar und von einem geschalteten Gang nur ein Übergang zu einem in der Gangfolge nächstliegenden Gang möglich ist,
**dadurch gekennzeichnet**, daß der erste Kettenwechsler (30) ein durch die erste Schalteinheit (60) mechanisch ansteuerbarer mechanischer Kettenwechsler ist und daß der zweite Kettenwechsler (36) ein durch die zweite Schalteinheit (62) elektrisch ansteuerbarer Kettenwechsler ist.

2. Gangschalteinrichtung nach Anspruch 1, dadurch gekennzeichnet, daß die zweite Schalteinheit (62) eine Schaltsignalgeneratoreinheit (110) umfaßt, welche bei Betätigung des Schaltelements (40) Schaltsignale (194, 198) erzeugt.

3. Gangschaltsystem nach Anspruch 2, dadurch gekennzeichnet, daß das Schaltelement (40) um eine Achse (74) drehbar ist und daß die Schaltsignalgeneratoreinheit (110) bei einer durch das Schaltelement (40) erzeugten Drehbewegung die Schaltsignale (194, 198) erzeugt.

4. Gangschaltsystem nach Anspruch 2 oder 3, dadurch gekennzeichnet, daß die Signalgeneratoreinheit (110) elektrische Auf- oder Ab-Schaltsignale (194, 198) für den zweiten Kettenwechsler (36) erzeugt.

5. Gangschaltsystem nach Anspruch 4, dadurch gekennzeichnet, daß die Auf-Schaltsignale (194) und die Ab-Schaltsignale (198) an getrennten Signalanschlüssen (186, 188) ausgegeben werden.

6. Gangschaltsystem nach einem der Ansprüche 2 bis 5, dadurch gekennzeichnet, daß die Signalgeneratoreinheit (110) Strompulse als Schaltsignale erzeugt.

7. Gangschaltsystem nach einem der Ansprüche 2 bis 6, dadurch gekennzeichnet, daß die Schaltsignalgeneratoreinheit (110) eine Schaltkulisse (112, 116) aufweist, welche mit einer elektrischen Schaltsignalgebereinheit (120, 122) zusammenwirkt.

8. Gangschaltsystem nach Anspruch 7, dadurch gekennzeichnet, daß die Schaltsignalgebereinheit zwei Schaltsignalgeber (120, 122) umfaßt, von denen jeder bei Betätigung durch die Schaltkulisse (112, 116) ein Schaltsignal (156, 158) erzeugt und daß die Schaltkulisse zwei Kulissenbahnen (112, 116) umfaßt, von denen jede auf einen der Schaltsignalgeber (120, 122) wirkt.

9. Gangschaltsystem nach einem der Ansprüche 2 bis 8, dadurch gekennzeichnet, daß die Schaltsignalgeneratoreinheit (110) eine Schaltrichtungserkennungseinheit (170) aufweist, welche je nach Schaltrichtung (190, 192) die von der Schaltsignalgebereinheit (120, 122) erzeugten Schaltsignale (156, 158) als Auf-Schaltsignale (194) oder Ab-Schaltsignale (198) ausgibt.

10. Gangschaltsystem nach Anspruch 9, dadurch gekennzeichnet, daß die Schaltrichtungserkennungseinheit (170) je nach Schaltrichtung (190, 192) die Schaltsignale (156, 158) des einen Schaltsignalgebers (120) als AufSchaltsignale (194) und die Schaltsignale (158, 156) des anderen Schaltsignalgebers (122) als Ab-Schaltsignale (198) oder umgekehrt ausgibt.

11. Gangschaltsystem nach einem der voranstehenden Ansprüche, dadurch gekennzeichnet, daß die erste Schalteinheit (60) ein Kurvenbahnelement (70) und einen mit diesem zusammenwirkenden Bahnfolger (88) aufweist, über welchen der erste Kettenwechsler (30) mechanisch betätigbar ist.

12. Gangschaltsystem nach Anspruch 11, dadurch gekennzeichnet, daß die Winkelabschnitte zwischen den Schaltstellungen ([4], [5]; [8], [9]), in denen ein Umlegen der Kette (20) von einem Kettenblatt (18) auf ein anderes Kettenblatt (18) erfolgt, größer sind als die übrigen Winkelabstände.
